# EUROPEAN PATENT APPLICATION

(11) **EP 4 546 019 A1**
(43) Date of publication of application: **30.04.2025**
(21) Application number: 23826832.0
(22) Date of filing: 15.05.2023
(51) Int. Cl.: G02B 6/40

(54) **OPTICAL CONNECTOR, FERRULE ACCOMMODATING COMPONENT, FERRULE ACCOMMODATING STRUCTURE, OPTICAL COUPLING STRUCTURE, AND METHOD FOR REPLACING OPTICAL FIBER**

(30) Priority: 23.06.2022 JP 2022101189
(71) Applicant: SUMITOMO ELECTRIC INDUSTRIES, LTD., Osaka-shi, Osaka 541-0041 (JP)
(72) Inventor: MORISHIMA Tetsu, Osaka-shi, Osaka 541-0041 (JP); ARAO Yuki, Osaka-shi, Osaka 541-0041 (JP); MOURI Shintaro, Osaka-shi, Osaka 541-0041 (JP)
(74) Representative: TBK
(86) International application number: PCT/JP2023/018133
(87) International publication number: WO 2023/248644

(57) **Abstract**

This optical connector comprises a plurality of optical fibers, a plurality of ferrules, and a ferrule accommodating component that includes a plurality of accommodating parts and in which the plurality of accommodating parts are separated by a plurality of side walls and accommodate one each of the plurality of ferrules. Each of the ferrules includes a ferrule body and a flange that protrudes outward from an outer surface of the ferrule body. Each of the accommodating parts includes an accommodating wall surface that forms an accommodating space for accommodating a ferrule and detachably fixes a ferrule. The accommodating wall surface includes an abutting part that abuts against the flange. The accommodating wall surface and the flange are provided with angle determination grooves for determining the rotation angle of the ferrule about a center axis with respect to the ferrule accommodating component.

## Description

### Technical Field

The present disclosure relates to an optical connector, a ferrule accommodating component, a ferrule accommodating structure, an optical coupling structure, and a method for replacing optical fiber. This application claims priority based on Japanese Patent Application No. 2022-101189 filed on June 23, 2022, and the entire contents of the Japanese patent application are incorporated herein by reference.

### Background Art

Patent literature 1 discloses a multi-core optical connector including a plurality of optical fibers. In this optical connector, a plurality of optical fiber holding components are disposed inside a ferrule, and the plurality of optical fibers that need rotational alignments are held by the plurality of optical fiber holding components inside the ferrule, respectively. When this optical connector is manufactured, each of optical fibers is rotationally aligned in the plurality of optical fiber holding components, and then the plurality of optical fiber holding components are disposed inside the ferrule and fixed to the ferrule collectively with an adhesive.

### Citation List

### Patent Literature

Patent literature 1: WO 2016/031678
Patent literature 2: Japanese Unexamined Patent Application Publication No. 2003-156648

### Summary of Invention

An optical connector according to an embodiment of the present disclosure includes a plurality of optical fibers including central axes extending in a first direction one by one, and arranged in a second direction intersecting the first direction, a plurality of ferrules retaining the plurality of optical fibers one by one, and a ferrule accommodating component including a plurality of accommodating portions arranged in the second direction, the plurality of accommodating portions each being separated by a plurality of side walls arranged in the second direction, the plurality of accommodating portions accommodating the plurality of ferrules one by one. Each of the plurality of optical fibers includes at least one of a core or a stress applying portion at a position deviated from the central axis. Each of the plurality of ferrules includes a ferrule body retaining the optical fiber, and a flange protruding outside from an outer surface of the ferrule body. Each of the plurality of accommodating portions includes an accommodating wall surface forming an accommodation space accommodating a portion of the ferrule including at least the flange, and the ferrule is removably fixed to the accommodating wall surface. The accommodating wall surface includes an abutting portion, the flange abutting against the abutting portion in the first direction. The accommodating wall surface and the flange are provided with an angle determination mechanism configured to determine a rotation angle of the ferrule around the central axis with respect to the ferrule accommodating component.

A ferrule accommodating component according to an embodiment of the present disclosure is a ferrule accommodating component configured to accommodate a plurality of ferrules each retaining an optical fiber including at least one of a core or a stress applying portion at a position deviated from a central axis. The ferrule accommodating component includes a plurality of accommodating portions separated by a plurality of side walls arranged in a second direction intersecting a first direction in which the central axis extends, the plurality of accommodating portions being configured to accommodate the plurality of ferrules one by one. Each of the plurality of accommodating portions includes an accommodating wall surface forming an accommodation space configured to accommodate the ferrule, and the ferrule is removably fixed to the accommodating wall surface. The accommodating wall surface includes an abutting portion configured to allow a flange provided on the ferrule to abut against the abutting portion in the first direction. The accommodating wall surface is provided with an angle determination mechanism configured to determine a rotation angle of the ferrule around the central axis with respect to the ferrule accommodating component.

### Brief Description of Drawings

FIG. 1 is a perspective view showing an optical connector according to an embodiment.
FIG. 2 is an exploded perspective view of the optical connector of FIG. 1.
FIG. 3 is a perspective view showing a ferrule accommodating structure included in the optical connector of FIG. 1.
FIG. 4 is a perspective view showing a ferrule accommodated in the ferrule accommodating structure of FIG. 3.
FIG. 5 is a cross-sectional view of the ferrule taken along line V-V of FIG. 4.
FIG. 6 is a perspective view showing a ferrule accommodating component included in the ferrule accommodating structure shown in FIG. 3.
FIG. 7 is a plan view showing the ferrule accommodating component of FIG. 6.
FIG. 8 is a cross-sectional view of the optical connector taken along line VIII-VIII of FIG. 3.
FIG. 9 is a cross-sectional view of the optical connector taken along line IX-IX of FIG. 8.
FIG. 10 is a plan view showing an optical coupling structure including the optical connector of FIG. 1.
FIG. 11 is a cross-sectional view showing an optical connector according to a modification 1.
FIG. 12 is a cross-sectional view showing an optical connector according to a modification 2.
FIG. 13 is a cross-sectional view of the optical connector taken along line XIII-XIII of FIG. 12.
FIG. 14 is a cross-sectional view showing an optical connector according to a modification 3.
FIG. 15 is a perspective view showing a ferrule included in the optical connector of FIG. 14.
FIG. 16 is a cross-sectional view showing another cross section of the optical connector of FIG. 14.
FIG. 17 is a perspective view showing an optical connector according to a modification 4.

### Description of Embodiments

### [Problems to be Solved by the Invention]

In the optical connector described above, when a problem such as disconnection occurs in the optical fiber, replacement of the optical fiber may be requested. However, in the optical connector described above, the plurality of optical fibers are collectively bonded to the ferrule with the adhesive. Thus, when a problem occurs in any of the optical fibers, the optical connector is required to be replaced as a whole, and all the optical fibers including the other optical fibers in which no problem occurs are replaced. In this case, the connector is reassembled using alternative optical fibers, and it is required to perform a series of operations of mounting all the alternative optical fibers in the ferrule after performing the rotational alignments on all the alternative optical fibers. Thus, the above-described optical connector has a problem that it takes a lot of time and effort to replace the optical fiber.

The present disclosure provides an optical connector, a ferrule accommodating component, an optical fiber coupling component, an optical coupling structure, and a method for replacing optical fiber, which can easily replace an optical fiber.

### [Advantageous Effects of Present Disclosure]

According to the optical connector, the ferrule accommodating component, the ferrule accommodating structure, the optical coupling structure, and the method for replacing optical fiber according to the present disclosure, the optical fiber can be easily replaced.

### [Description of Embodiments of Present Disclosure]

First, the contents of embodiments of the present disclosure will be listed and explained.
(1) An optical connector according to an embodiment of the present disclosure includes a plurality of optical fibers including central axes extending in a first direction one by one, and arranged in a second direction intersecting the first direction, a plurality of ferrules retaining the plurality of optical fibers one by one, and a ferrule accommodating component including a plurality of accommodating portions arranged in the second direction, the plurality of accommodating portions each being separated by a plurality of side walls arranged in the second direction, the plurality of accommodating portions accommodating the plurality of ferrules one by one. Each of the plurality of optical fibers includes at least one of a core or a stress applying portion at a position deviated from the central axis. Each of the plurality of ferrules includes a ferrule body retaining the optical fiber, and a flange protruding outside from an outer surface of the ferrule body. Each of the plurality of accommodating portions includes an accommodating wall surface forming an accommodation space accommodating a portion of the ferrule including at least the flange, and the ferrule is removably fixed to the accommodating wall surface. The accommodating wall surface includes an abutting portion, the flange abutting against the abutting portion in the first direction. The accommodating wall surface and the flange are provided with an angle determination mechanism configured to determine a rotation angle of the ferrule around the central axis with respect to the ferrule accommodating component.
   In the optical connector described above, since the plurality of ferrules retaining the plurality of optical fibers one by one are accommodated in the plurality of accommodating portions of the ferrule accommodating component one by one, each ferrule can be independently fixed to the respective accommodating portion. Further, since the ferrule is removably fixed to an accommodating wall surface of the accommodating portion, when any one of the optical fibers needs to be replaced, one ferrule corresponding to the optical fiber can be removed from the accommodating wall surface, and a ferrule retaining an optical fiber of a new one can be fixed to the accommodating wall surface. Thus, according to the optical connector described above, when an optical fiber is required, the optical fiber that needs to be replaced can be replaced individually instead of replacing the entire optical connector. Further, in the optical connector described above, the accommodating wall surface of the accommodating portion and the flange of the ferrule are provided with an angle determination mechanism configured to determine a rotation angle of the ferrule around the central axis with respect to the ferrule accommodating component. Thus, when the ferrule corresponding to the optical fiber that needs to be replaced is removed from the accommodating portion and the ferrule retaining the optical fiber of a new one that has been subjected to the rotation alignment is disposed on the accommodating wall surface, the ferrule can be easily fixed to the accommodating wall surface while maintaining the rotation angle of the optical fiber that has been subjected to the rotation alignment. Further, when the ferrule is disposed on the accommodating wall surface, the flange of the ferrule is abutted against the abutting portion in the first direction, whereby the position of the ferrule in the first direction with respect to the ferrule accommodating component can be easily determined. In this manner, in the optical connector described above, when the optical fiber needs to be replaced, the optical fiber that needs to be replaced can be replaced individually. Further, the ferrule can be easily attached to the accommodating portion when the optical fiber is replaced. This makes it possible to reduce the time and effort required for replacing the optical fiber and to easily replace the optical fiber.
(2) In the optical connector according to the above (1), the angle determination mechanism may include a first flat surface formed on the accommodating wall surface, and a second flat surface formed on the flange and being in contact with the first flat surface. In this case, the rotation angle of the ferrule around the central axis with respect to the ferrule accommodating component can be easily and accurately determined by a simple operation of bringing the first flat surface and the second flat surface into contact with each other.
(3) In the optical connector according to the above (1), the angle determination mechanism may include a protrusion formed on one of the accommodating wall surface and the flange, and a recess formed in another one of the accommodating wall surface and the flange and fitted to the protrusion. In this case, the rotation angle of the ferrule around the central axis with respect to the ferrule accommodating component can be easily and accurately determined by a simple operation of fitting the protrusion and the recess to each other.
(4) In the optical connector according to any one of the above (1) to (3), each of the plurality of accommodating portions may be a groove formed between a pair of side walls adjacent to each other with the ferrule interposed therebetween among the plurality of side walls. A bottom surface of the groove may constitute the accommodating wall surface together with respective inner wall surfaces of the pair of side walls. A lid may be provided at an opening of the groove facing the bottom surface, and the lid may cover the opening. The flange may be in contact with the bottom surface and the lid. In this case, the ferrule can be easily positioned with respect to the ferrule accommodating component by a simple operation of pressing the flange against the bottom surface of the groove by the lid.
(5) In the optical connector according to the above (4), the ferrule accommodating component and the lid each may be formed of a magnetic material. The lid may be fixed to the ferrule accommodating component with a magnetic force generated between the lid and the ferrule accommodating component. In this case, the ferrule can be easily fixed to the ferrule accommodating component by using the magnetic force between the lid and the ferrule accommodating component.
(6) In the optical connector according to any one of the above (1) to (3), each of the plurality of accommodating portions may be a through-hole extending through the ferrule accommodating component in the first direction. An inner surface of the through-hole may constitute the accommodating wall surface. The flange may be in contact with the inner surface. In this case, the ferrule can be easily positioned with respect to the ferrule accommodating component by a simple operation of inserting the ferrule into the through-hole.
(7) The optical connector according to any one of the above (1) to (6) may further include a holding member facing the abutting portion with the flange interposed therebetween in the first direction, and an elastic member provided between the flange and the holding member, held by the holding member in the first direction, and urging the flange toward the abutting portion. In this case, the flange can be more reliably abutted against the abutting portion by the urging force of the elastic member. This makes it possible to more reliably position the ferrule in the first direction with respect to the ferrule accommodating component.
(8) In the optical connector according to any one of the above (1) to (7), the optical fiber may be a multi-core fiber, a polarization maintaining fiber, or a bundle fiber. When such optical fibers are used, rotational alignments are required, and the rotational alignment operation increases by the number of optical fibers to be replaced. In contrast, according to the optical connector described above in which the optical fibers can be individually replaced, the rotational alignment operation does not have to be performed on the optical fibers that do not need to be replaced, and thus the time and effort required for replacement can be effectively reduced.
(9) A ferrule accommodating component according to an embodiment of the present disclosure is a ferrule accommodating component configured to accommodate a plurality of ferrules each retaining an optical fiber including at least one of a core or a stress applying portion at a position deviated from a central axis. The ferrule accommodating component includes a plurality of accommodating portions separated by a plurality of side walls arranged in a second direction intersecting a first direction in which the central axis extends, the plurality of accommodating portions being configured to accommodate the plurality of ferrules one by one. Each of the plurality of accommodating portions includes an accommodating wall surface forming an accommodation space configured to accommodate the ferrule, and the ferrule is removably fixed to the accommodating wall surface. The accommodating wall surface includes an abutting portion configured to allow a flange provided on the ferrule to abut against the abutting portion in the first direction. The accommodating wall surface is provided with an angle determination mechanism configured to determine a rotation angle of the ferrule around the central axis with respect to the ferrule accommodating component. In the ferrule accommodating component, when the optical fiber needs to be replaced, the optical fiber that needs to be replaced can be individually replaced as described above. This makes it possible to easily replace the optical fiber.
(10) A ferrule accommodating structure according to an embodiment of the present disclosure includes the ferrule accommodating component according to the above (9) and the plurality of ferrules accommodated in the plurality of respective accommodating portions and removably fixed to the plurality of respective accommodating portions. In the ferrule accommodating structure, when the optical fiber needs to be replaced, the optical fiber that needs to be replaced can be individually replaced as described above. This makes it possible to easily replace the optical fiber.
(11) An optical coupling structure according to an embodiment of the present disclosure includes a first optical connector and a second optical connector each being the optical connector according to any one of the above (1) to (8). In the optical coupling structure, the plurality of optical fibers of the first optical connector are disposed to face the plurality of optical fibers of the second optical connector in the first direction and are optically coupled to the plurality of respective optical fibers of the second optical connector. Since the optical coupling structure includes the first optical connector and the second optical connector which are the optical connectors described above, the optical fiber can be easily replaced as described above.
(12) The optical coupling structure according to the above (11) may further include a sleeve including a plurality of through-holes configured to allow the plurality of ferrules to be inserted through the plurality of through-holes. The plurality of ferrules of the first optical connector may be inserted into portions on one side of the plurality of respective through-holes. The plurality of ferrules of the second optical connector may be inserted into portions on another side of the plurality of respective through-holes. In this case, since the positions of the first optical connector and the second optical connector can be regulated with the sleeve, the first optical connector and the second optical connector can be optically coupled with high accuracy.
(13) A method for replacing the optical fiber according to an embodiment of the present disclosure is a method for replacing the optical fiber using the optical connector according to any one of the above (1) to (8). The method for replacing the optical fiber includes: removing the ferrule retaining the optical fiber of a replacement target among the plurality of optical fibers from the accommodating portion; and accommodating the ferrule of an alternative one retaining the optical fiber of a new one in the accommodating portion from which the ferrule of the replacement target has been removed. The accommodating the ferrule of the alternative one in the accommodating portion includes: rotationally aligning the optical fiber of the new one with respect to the ferrule of the alternative one around the central axis; determining a rotation angle of the ferrule of the alternative one around the central axis with respect to the ferrule accommodating component with reference to the angle determination mechanism provided on the flange and the accommodating wall surface; and determining a position of the ferrule of the alternative one in the first direction with respect to the ferrule accommodating component by the flange abutting against the abutting portion of the accommodating wall surface in the first direction. In the method for replacing optical fiber, when the optical fiber needs to be replaced, the optical fiber that needs to be replaced can be individually replaced as described above. This makes it possible to easily replace the optical fiber.

### [Details of Embodiments of Present Disclosure]

Specific examples of an optical connector 1, a ferrule accommodating component 30, a ferrule accommodating structure 70, an optical coupling structure 100, and a method for replacing an optical fiber 10 according to the embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be appropriately omitted.

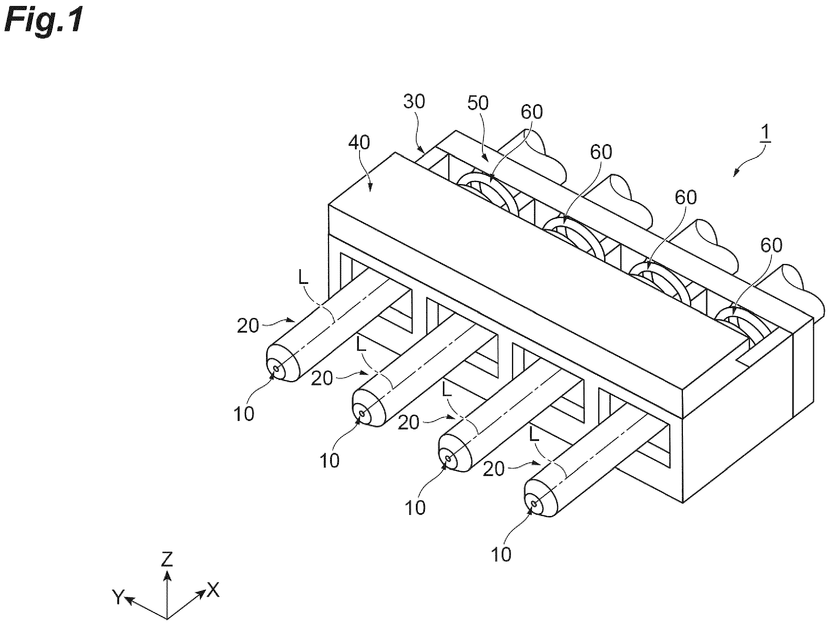

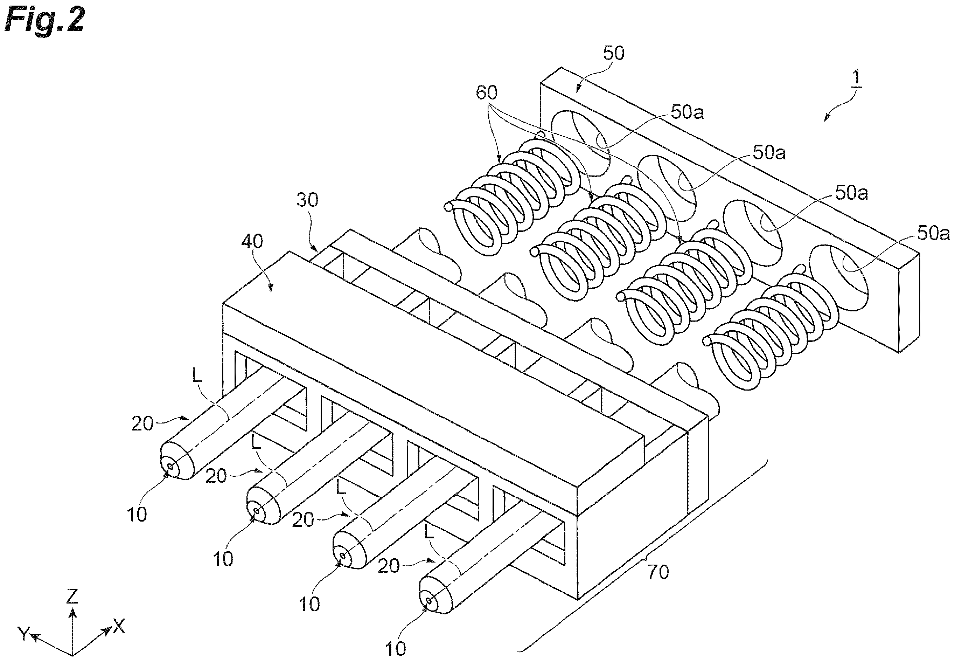

FIG. 1 is a perspective view showing optical connector 1 according to an embodiment. FIG. 2 is an exploded perspective view of optical connector 1. In each drawing, an XYZ orthogonal coordinate system is shown for easy understanding. As shown in FIGs. 1 and 2, optical connector 1 includes, for example, a plurality of optical fibers 10, a plurality of ferrules 20, ferrule accommodating component 30, a lid 40, a holding member 50, and a plurality of elastic members 60. The plurality of optical fibers 10, the plurality of ferrules 20, and ferrule accommodating component 30 constitute ferrule accommodating structure 70 (see FIG. 2). Hereinafter, a direction in which a central axis L of each optical fiber 10 included in the plurality of optical fibers 10 extends is referred to as an X direction (one example of "first direction"), a direction in which the plurality of optical fibers 10 are arranged and which intersects (in the present embodiment, is orthogonal to) the X direction is referred to as a Y direction (one example of "second direction"), and a direction which intersects (in the present embodiment, is orthogonal to) the X direction and the Y direction is referred to as a Z direction. Hereinafter, one side in the Z direction may be referred to as "upper", another side in the Z direction may be referred to as "lower", one side in the X direction may be referred to as "front", and another side in the X direction may be referred to as "rear". Central axis L is an axis line passing through the center of optical fiber 10. As shown in FIGs. 1 and 2, each of the plurality of central axes L is included in each of the plurality of optical fibers 10 one by one.

Optical connector 1 has a structure in which the plurality of ferrules 20 each retaining a respective one of the plurality of optical fibers 10 are individually accommodated in ferrule accommodating component 30. "The plurality of ferrules 20 each retaining a respective one of the plurality of optical fibers 10" means that the plurality of ferrules 20 retain the plurality of optical fibers 10 one by one, that is, one ferrule 20 retains one optical fiber 10. Lid 40 is provided above ferrule accommodating component 30 that accommodates the plurality of ferrules 20. The plurality of ferrules 20 are pressed against ferrule accommodating component 30 by lid 40. Holding member 50 is provided at the rear of ferrule accommodating component 30. A plurality of elastic members 60 are provided between the plurality of ferrules 20 and holding member 50. The plurality of elastic members 60 are held by holding member 50 and urge the plurality of ferrules 20 forward.

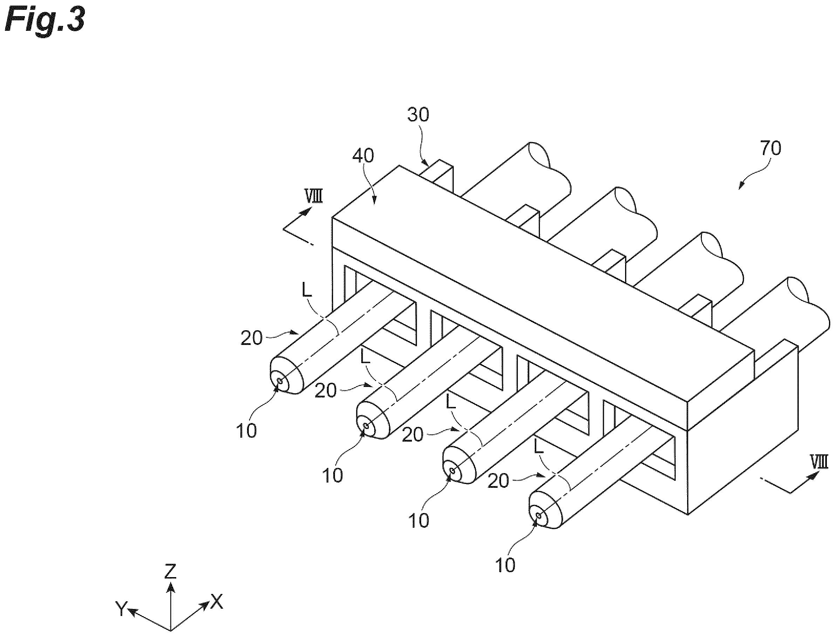

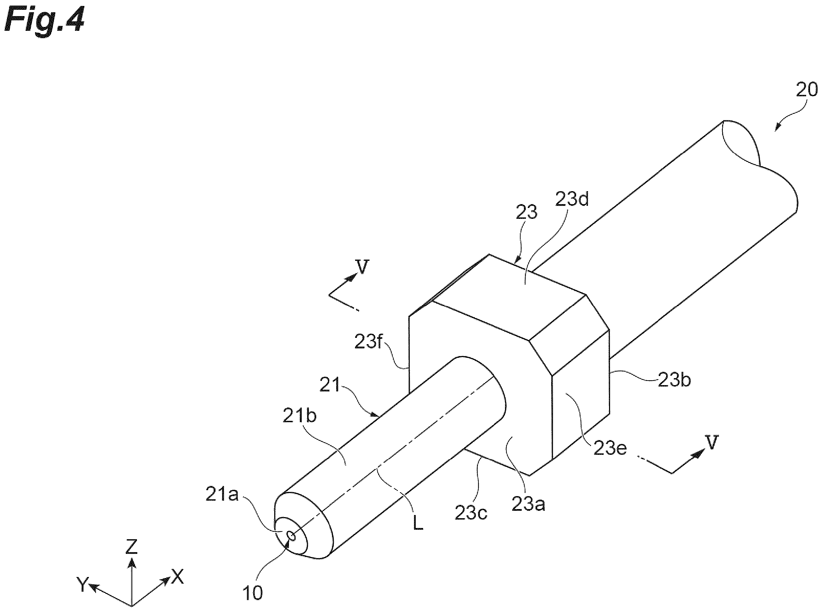

FIG. 3 is a perspective view showing ferrule accommodating structure 70. FIG. 4 is a perspective view showing one of the plurality of ferrules 20 accommodated in ferrule accommodating structure 70. As shown in FIG. 4, ferrule 20 includes, for example, a ferrule body 21 and a flange 23. Ferrule body 21 is, for example, a cylindrical member that retains optical fiber 10, and extends in the X direction along which central axis L extends. Ferrule body 21 may be, for example, a capillary. A tip of optical fiber 10 is exposed from a tip end surface 21a of ferrule body 21. An outer surface 21b of ferrule body 21 may be, for example, a circumferential surface centered on central axis L.

Flange 23 is a member protruding outside (i.e., in a direction away from central axis L) from outer surface 21b. Flange 23 is formed on outer surface 21b rearward of tip end surface 21a. Flange 23 has, for example, a rectangular shape centered on central axis L when viewed from the X direction. The shape of flange 23 as viewed from the X direction is not limited to a rectangular shape, and may be another shape, such as a circular shape. Flange 23 includes a front end surface 23a and a rear end surface 23b arranged in the X direction. Front end surface 23a and rear end surface 23b are, for example, flat surfaces along the Y direction and the Z direction, and are formed perpendicular to outer surface 21b of ferrule body 21. Front end surface 23a and rear end surface 23b are arranged, for example, in parallel to tip end surface 21a.

Flange 23 further includes, for example, a side surface 23c, a side surface 23d, a side surface 23e, and a side surface 23f. Side surface 23c, side surface 23d, side surface 23e, and side surface 23f connect front end surface 23a and rear end surface 23b in the X direction, and constitute an outer surface of flange 23 together with front end surface 23a and rear end surface 23b. Side surface 23c and side surface 23d are located on both sides across ferrule body 21 in the Z direction. Side surface 23c and side surface 23d are, for example, flat surfaces along the X direction and the Y direction, and are formed perpendicular to front end surface 23a and rear end surface 23b. Side surface 23e and side surface 23f are arranged on both sides with ferrule body 21 interposed therebetween in the Y direction. Side surface 23e and side surface 23f are, for example, flat surfaces along the X direction and the Z direction, and are formed perpendicular to front end surface 23a and rear end surface 23b. Side surface 23e and side surface 23f are formed perpendicular to side surface 23c and side surface 23d.

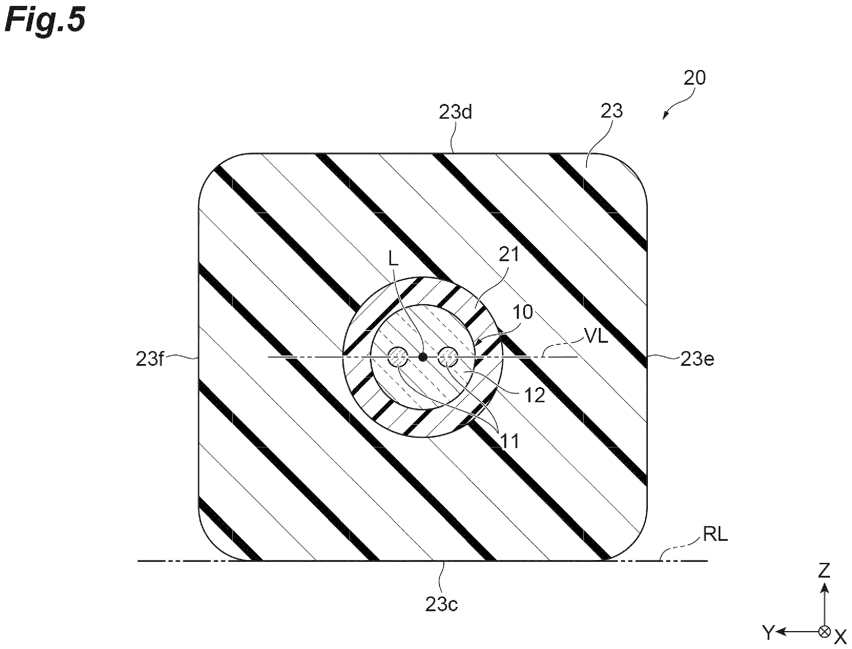

FIG. 5 is a cross-sectional view of ferrule 20 taken along line V-V of FIG. 4. Optical fiber 10 retained in ferrule body 21 is an optical fiber that requires rotational alignment with respect to central axis L. Optical fiber 10 that requires rotational alignment is, for example, a multi-core fiber (MCF), and has at least one core at a position deviated from central axis L. In the example shown in FIG. 5, optical fiber 10 does not have a core on central axis L, but has two cores 11 at positions deviated from central axis L. Each core 11 is arranged on a straight line passing through central axis L. The state where each core 11 is deviated from central axis L may be a state where the center of each core 11 does not coincide with central axis L.

Each core 11 is arranged on both sides with central axis L interposed therebetween in the Y direction, for example. In this case, when viewed from the X direction in which central axis L extends, a virtual straight line VL passing through the center of each core 11 and central axis L extends in the Y direction and is parallel to a reference straight line RL along side surface 23d of flange 23. A cladding 12 retaining each core 11 is fixed to ferrule body 21 by means of an adhesive. The material of the adhesive for fixing cladding 12 to ferrule body 21 is, for example, a thermoplastic resin, a thermosetting resin, or an ultraviolet curable resin.

Each core may be arranged on both sides with central axis L interposed therebetween in the Z direction. A virtual straight line connecting each core may be parallel to side surface 23e of flange 23 or parallel to a reference line along side surface 23f. The number and arrangement of the cores are not limited to the example shown in FIG. 5, and can be changed as appropriate. For example, the number of cores is not limited to two, and may be four, six, eight, or more. The core may be arranged on central axis L.

Examples of the optical fiber 10 that requires rotational alignment, include a bundle fiber or a polarization maintaining fiber (PMF) in addition to the multi-core fiber. When optical fiber 10 is a polarization maintaining fiber, optical fiber 10 has a stress applying portion at a position deviated from central axis L. In this case, for example, core 11 of optical fiber 10 is arranged on central axis L, and stress applying portions are arranged on both sides with core 11 interposed therebetween.

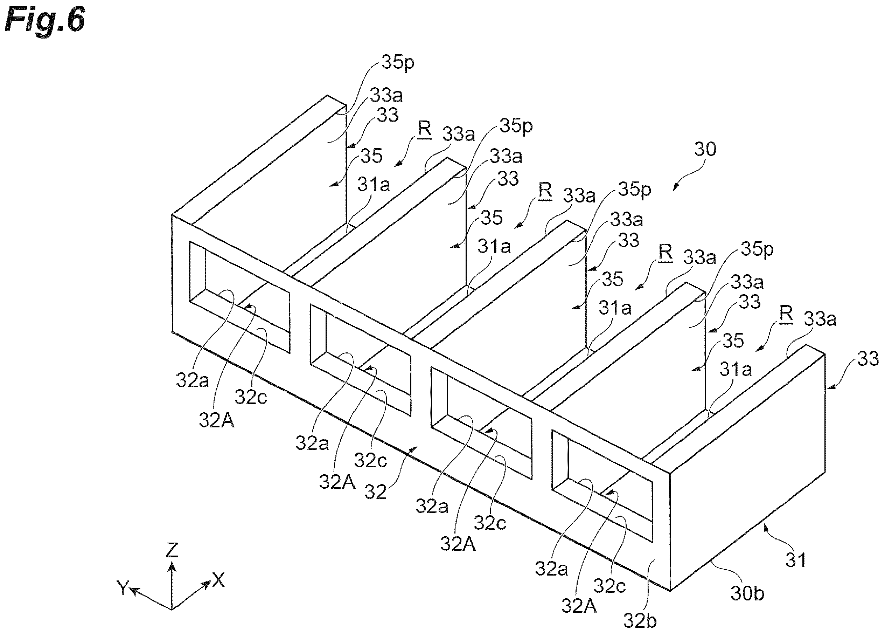

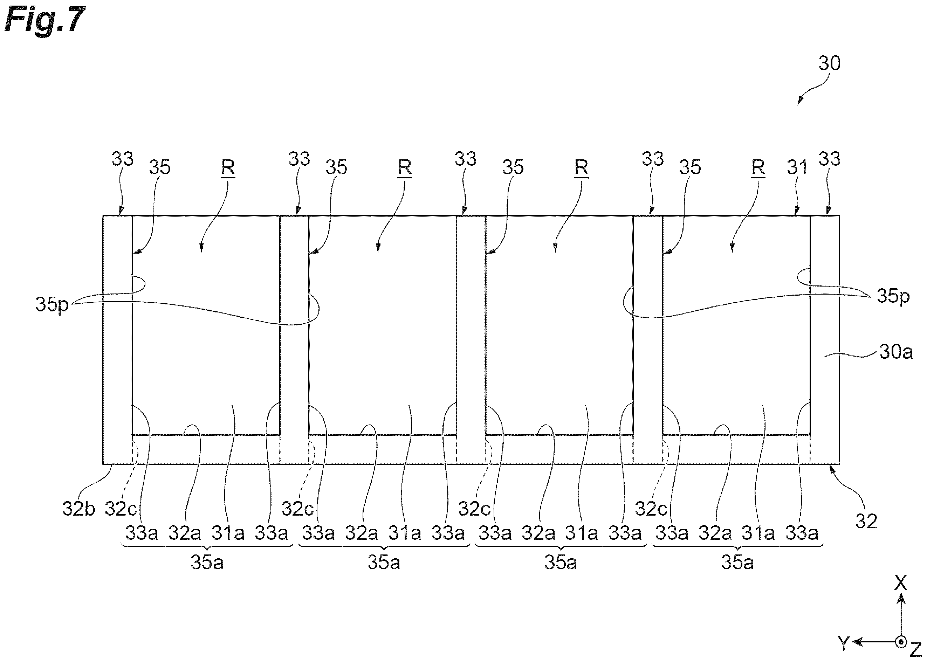

FIG. 6 is a perspective view showing ferrule accommodating component 30. FIG. 7 is a plan view showing ferrule accommodating component 30. Ferrule accommodating component 30 is a part for individually accommodating the plurality of ferrules 20. Ferrule accommodating component 30 has a plurality of accommodating portions 35 for accommodating the plurality of ferrules 20, respectively. The term "a plurality of accommodating portions 35 accommodate the plurality of ferrules 20, respectively" means that the plurality of accommodating portions 35 accommodate the plurality of ferrules 20 one by one, that is, one accommodating portion 35 accommodates one ferrule 20. The plurality of accommodating portions 35 are arranged in the Y direction corresponding to the plurality of ferrules 20. Each of accommodating portions 35 included in the plurality of accommodating portions 35 has an accommodation space R for accommodating ferrule 20. Ferrule accommodating component 30 has, for example, a bottom wall 31, an end wall 32, and a plurality of side walls 33 as a configuration for forming accommodation space R of the plurality of accommodating portions 35.

Bottom wall 31 includes a bottom surface 31a on which ferrule 20 is placed in accommodation space R. Bottom surface 31a is, for example, a flat surface along the X direction and the Y direction. The opposite surface of bottom wall 31 on the opposite side of bottom surface 31a constitutes a lower end surface 30b of ferrule accommodating component 30. Lower end surface 30b is an end surface located at the lower end (one end) of ferrule accommodating component 30 in the Z direction. End wall 32 is provided, for example, at the front end of bottom wall 31 in the X direction, and is formed perpendicular to bottom wall 31. End wall 32 faces ferrules 20 accommodated in accommodation spaces R in the X direction. End wall 32 includes an inner side surface 32a facing ferrule 20 and an outer side surface 32b facing opposite to inner side surface 32a. Inner side surface 32a and outer side surface 32b are, for example, flat surfaces along the Y direction and the Z direction, and are arranged in parallel to each other. Inner side surface 32a and outer side surface 32b are formed, for example, perpendicular to bottom surface 31a.

The plurality of side walls 33 extend rearward from end wall 32 on bottom surface 31a, and are arranged in the Y direction so as to separate the plurality of accommodating portions 35 from each other. Each of side walls 33 included in the plurality of side walls 33 has a side surface 33a (one example of "inner wall surface") facing ferrule 20 accommodated in accommodation space R. Side surfaces 33a of respective side walls 33 are, for example, flat surfaces along in the X direction and the Z direction, and are arranged in parallel to each other. Side surface 33a is formed perpendicular to bottom surface 31a and inner side surface 32a. When side wall 33 extends in a direction including at least a Z direction component between accommodating portions 35 in the Y direction, it can be said that side wall 33 separates each of accommodating portions 35 in the Y direction. An upper end surface of each of end wall 32 and side walls 33 constitutes an upper end surface 30a of ferrule accommodating component 30. Upper end surface 30a of ferrule accommodating component 30 is an end surface located at the upper end (the other end) of ferrule accommodating component 30 in the Z direction.

Bottom surface 31a, inner side surface 32a, and two side surfaces 33a and 33a adjacent to each other in the Y direction constitute an accommodating wall surface 35a of accommodating portion 35 that forms accommodation space R. Accommodation space R is defined as a space surrounded by bottom surface 31a, inner side surface 32a, and two side surfaces 33a and 33a. At least a part of ferrule 20 is accommodated in accommodation space R. Thus, it is not necessary for the entire ferrule 20 to be accommodated in accommodation space R. Thus, side wall 33 and end wall 32 do not need to be formed to be higher than ferrule 20, and may be formed to be lower than ferrule 20.

Accommodating portion 35 may be regarded as a groove that is recessed from upper end surface 30a of ferrule accommodating component 30 and extends rearward in a straight line from end wall 32. Accommodating portion 35 may be referred to as a groove that opens upward. In this case, the bottom surface of the groove as accommodating portion 35 may be regarded as bottom surface 31a constituting accommodating wall surface 35a, and the pair of side surfaces of the groove may be regarded as two side surfaces 33a and 33a constituting accommodating wall surface 35a.

A plurality of openings 32c corresponding to the plurality of accommodating portions 35 are formed in end wall 32. The plurality of openings 32c extend through inner side surface 32a and outer side surface 32b in the X direction, and are arranged in the Y direction so as to correspond to the plurality of accommodating portions 35, respectively. Each opening 32c included in the plurality of openings 32c extends through end wall 32 in the X direction and communicates with accommodation space R. Opening 32c is formed, for example, at a position higher than bottom surface 31a. That is, opening 32c is formed at a position spaced upward from bottom surface 31a in the Z direction. Opening 32c and bottom surface 31a are connected in the Z direction by inner side surface 32a. Opening 32c has, for example, a rectangular shape having the Y direction as a longitudinal direction and the Z direction as a shorter side direction when viewed from the X direction. Opening 32c has a size that allows ferrule body 21 in front of flange 23 to be inserted therethrough.

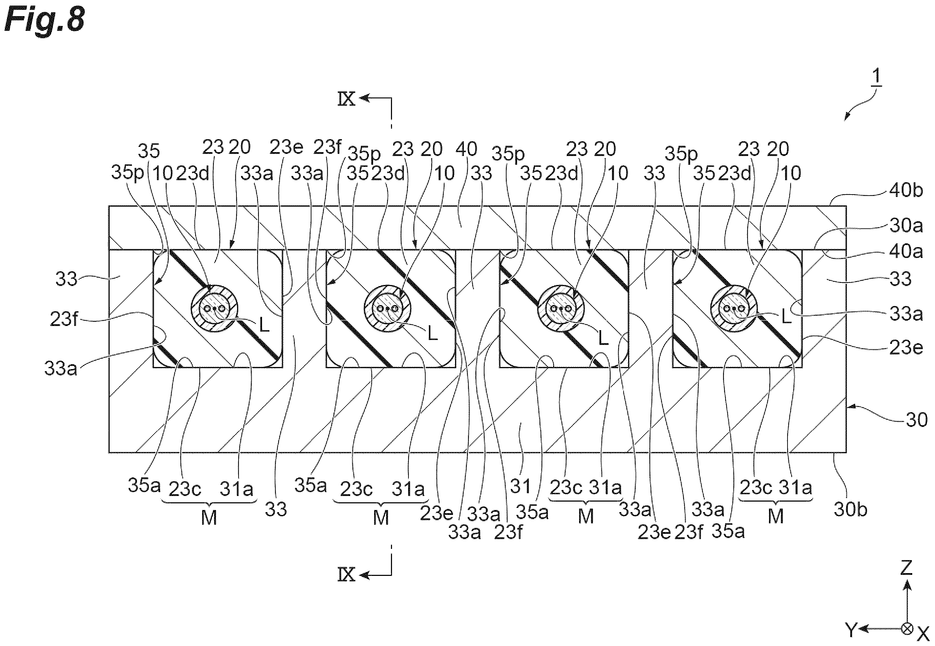

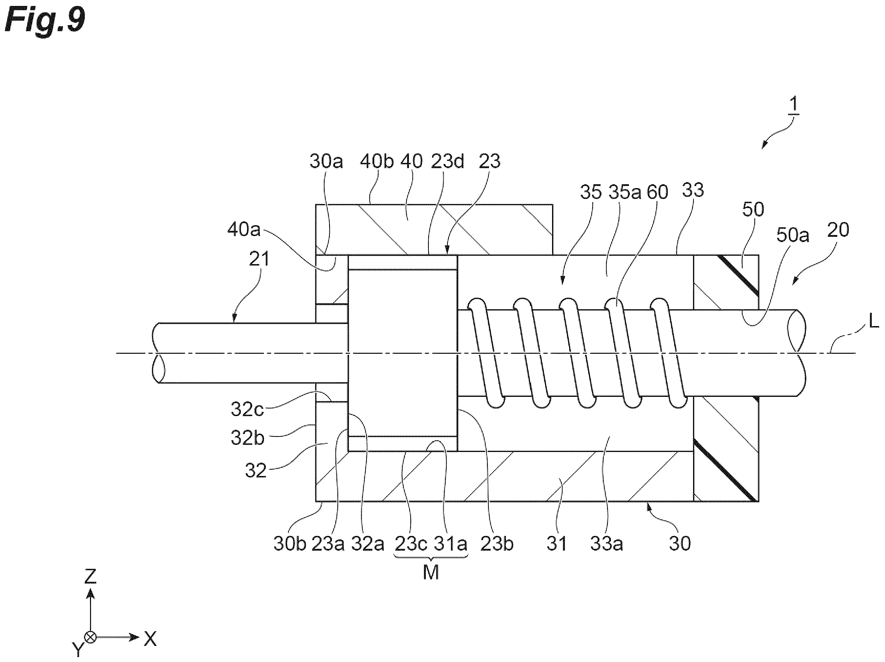

FIG. 8 is a cross-sectional view of optical connector 1 taken along line VIII-VIII of FIG. 3. FIG. 9 is a cross-sectional view of optical connector 1 taken along line IX-IX of FIG. 8. As shown in FIGs. 8 and 9, in a state where ferrule 20 is accommodated in accommodating portion 35, side surface 23c of flange 23 is in contact with bottom surface 31a of ferrule accommodating component 30. In the present embodiment, side surface 23c and bottom surface 31a are both flat surfaces. Thus, when ferrule 20 is accommodated in accommodating portion 35, a rotation angle of ferrule 20 around central axis L with respect to ferrule accommodating component 30 can be determined by disposing ferrule 20 so that side surface 23c and bottom surface 31a are brought into contact with each other. Thus, bottom surface 31a (one example of "first flat surface") and side surface 23c (one example of "second flat surface") constitute an angle determination mechanism M for determining the rotation angle of ferrule 20 around central axis L with respect to ferrule accommodating component 30.

Flange 23 is pressed toward bottom surface 31a of the Z direction by lid 40 provided above ferrule accommodating component 30. Lid 40 is, for example, a rectangular plate-shaped member having a longitudinal direction in the Y direction and a shorter side direction in the X direction (see FIG. 1). Lid 40 extends in the Y direction in a front portion of ferrule accommodating component 30, for example, and is disposed so as to cover an opening 35p above each accommodating portion 35. Upper opening 35p of accommodating portion 35 is formed in upper end surface 30a of ferrule accommodating component 30 at a position facing bottom surface 31a in the Z direction. Lid 40 has a rear surface 40a that is in contact with upper end surface 30a of ferrule accommodating component 30 and an upper surface 40b opposite to rear surface 40a. Rear surface 40a and upper surface 40b are, for example, flat surfaces along the X direction and the Y direction. Lid 40 is formed of, for example, a magnetic material. The magnetic material forming lid 40 may be, for example, a magnet such as a neodymium magnet, a ferrite magnet, or an alnico magnet, or may be a metal such as iron or ferrosilicon that generates a magnetic force between the magnet and the metal. In this case, ferrule accommodating component 30 may be formed of magnetic material similar to lid 40. For example, when one of lid 40 and ferrule accommodating component 30 is a magnet, another of lid 40 and ferrule accommodating component 30 may be a metal that generates a magnetic force between the metal and the magnet. Lid 40 is fixed to ferrule accommodating component 30 with a magnetic force generated between lid 40 and ferrule accommodating component 30.

The materials of lid 40 and ferrule accommodating component 30 are not necessarily a magnetic material, and may be, for example, another metal material that does not generate a magnetic force with the magnet, or another material such as a resin material. In this case, a fixing structure for fixing lid 40 and ferrule accommodating component 30 may be provided in lid 40 and ferrule accommodating component 30. For example, protrusion may be provided in one of lid 40 and ferrule accommodating component 30, and recess may be provided in another of lid 40 and ferrule accommodating component 30. In this case, lid 40 can be fixed to ferrule accommodating component 30 by fitting the protrusion to the recess. Alternatively, lid 40 may be screwed and fixed to ferrule accommodating component 30.

In a state in which lid 40 is fixed to ferrule accommodating component 30, side surface 23d of flange 23 is in contact with the rear surface of lid 40. Side surface 23d receives a pressing force due to a magnetic force generated between lid 40 and ferrule accommodating component 30, and is pressed toward bottom surface 31a in the Z direction. Thus, the position of ferrule 20 in the Z direction with respect to ferrule accommodating component 30 is determined. In order to press flange 23 downward by lid 40, a distance in the Z direction between upper end surface 30a and bottom surface 31a is set to be equal to or smaller than a width of flange 23 in the Z direction between side surface 23c and side surface 23d.

As shown in FIG. 8, side surface 23e and side surface 23f of flange 23 are in contact with two side surfaces 33a and 33a on both sides of ferrule 20, respectively. Thus, the position of ferrule 20 in the Y direction with respect to ferrule accommodating component 30 is defined. The width of flange 23 in the Y direction (i.e., the distance between side surface 23e and side surface 23f in the Y direction) is set to be equal to or smaller than the width of accommodating portion 35 in the Y direction (i.e., the distance between two side surfaces 33a and 33a adjacent to each other in the Y direction).

As shown in FIG. 9, front end surface 23a of flange 23 is in contact with inner side surface 32a of end wall 32 in the X direction. Front end surface 23a is abutted against inner side surface 32a in the X direction, and thus the position of ferrule 20 in the X direction with respect to ferrule accommodating component 30 is defined. Inner side surface 32a constitutes an abutting portion 32A for abutting flange 23 in the X direction. Abutting portion 32A may be, for example, a wall portion that corresponds to one of accommodating portion 35 in end wall 32 and is located between opening 32c and bottom surface 31a in the Z direction. In this case, inner side surface 32a may be an inner wall surface that faces accommodating portion 35 of abutting portion 32A. The width of opening 32c formed in end wall 32 in the Y direction is set to be the same as the width of flange 23 in the Y direction, for example. The width of opening 32c in the Z direction is set to be a range that is smaller than the width of flange 23 in the Z direction (i.e., the distance between side surface 23c and side surface 23d in the Z direction) and larger than the outer diameter of ferrule body 21 in front of flange 23.

Thus, in a state where flange 23 abuts against inner side surface 32a, ferrule body 21 in front of flange 23 passes through opening 32c in the X direction and protrudes to the outside of end wall 32. By abutting flange 23 against inner side surface 32a in this manner, the protruding amount of ferrule body 21 in the X direction from outer side surface 32b of end wall 32 is defined. Thus, inner side surface 32a has a function as a protruding amount defining portion for defining the protruding amount of ferrule body 21 in the X direction from outer side surface 32b.

Ferrule 20 is removably attached to accommodating wall surface 35a in a state of being accommodated in accommodating portion 35. For example, ferrule 20 is fixed to accommodating wall surface 35a with a hot-melt adhesive. The hot-melt adhesive has a thermal melting property of melting by heating. Thus, after ferrule 20 is fixed to accommodating wall surface 35a with the hot-melt adhesive, ferrule 20 can be removed from accommodating wall surface 35a by melting the hot-melt adhesive by heating. The location of adhesion of the hot-melt adhesive is not particularly limited as long as ferrule 20 can be fixed to accommodating wall surface 35a. For example, the hot-melt adhesive may be provided between side surface 23e of flange 23 and side surface 33a of accommodating wall surface 35a and between side surface 23f of flange 23 and side surface 33a of accommodating wall surface 35a, may be provided between side surface 23d of flange 23 and rear surface 40a of lid 40, or may be provided at other locations.

The method for fixing ferrule 20 to accommodating wall surface 35a is not limited to the fixing with the hot-melt adhesive, and may be another method as long as ferrule 20 can be removed from accommodating wall surface 35a. For example, ferrule 20 may be fixed to accommodating wall surface 35a by welding, or may be fixed to the accommodating wall by press-fitting. When ferrule 20 is fixed to accommodating wall surface 35a by welding, ferrule 20 can be removed from accommodating wall surface 35a by heating the welded portion. When ferrule 20 is fixed to accommodating wall surface 35a by press-fitting, ferrule 20 can be removed from accommodating wall surface 35a by pulling ferrule 20 in a direction opposite to the press-fitting direction.

Holding member 50 is provided at the rear of ferrule accommodating component 30. Holding member 50 is, for example, a rectangular plate-shaped member having a longitudinal direction in the Y direction and a shorter side direction in the Z direction (see FIGs. 1 and 2). As shown in FIG. 9, holding member 50 extends in the Y direction so as to close each accommodating portion 35, and is fixed to the rear end of ferrule accommodating component 30. Holding member 50 faces inner side surface 32a of end wall 32 with flange 23 interposed therebetween in the X direction. The method for fixing holding member 50 and ferrule accommodating component 30 may be, for example, screwing or other fixing methods. The material of holding member 50 may be, for example, a resin material or another material such as a metal material.

Holding member 50 is formed with a plurality of insertion holes 50a for inserting the plurality of ferrules 20, respectively. The plurality of insertion holes 50a are arranged in the Y direction corresponding to the plurality of ferrules 20 (see FIG. 2). The inner diameter of each of the plurality of insertion holes 50a is equal to or larger than the outer diameter of ferrule body 21 at the rear of flange 23. Holding member 50 functions as a pressing plate that holds the plurality of elastic members 60 in the X direction.

The plurality of elastic members 60 are arranged in the Y direction corresponding to the plurality of ferrules 20. Each of elastic members 60 included in the plurality of elastic members 60 is accommodated in accommodating portion 35 and is provided between flange 23 and holding member 50 in the X direction. Elastic member 60 is, for example, a coil spring. The outer diameter of elastic member 60 is larger than the inner diameter of insertion hole 50a. Thus, ferrule 20 is inserted into insertion hole 50a, while elastic member 60 is held by holding member 50 in the X direction.

Elastic member 60 held by holding member 50 urges flange 23 of ferrule 20 toward inner side surface 32a of end wall 32 in the X direction. Thus, flange 23 is pressed against inner side surface 32a in the X direction, and the position of ferrule 20 in the X direction with respect to ferrule accommodating component 30 is more reliably defined. Elastic member 60 may be a spring other than a coil spring, and the type of elastic member 60 is not particularly limited. The plurality of elastic members 60 may be omitted. It is not necessary to provide the plurality of elastic members 60 corresponding to the plurality of accommodating portions 35, and one elastic member may be provided. In this case, all ferrules 20 are urged toward inner side surface 32a by one elastic member.

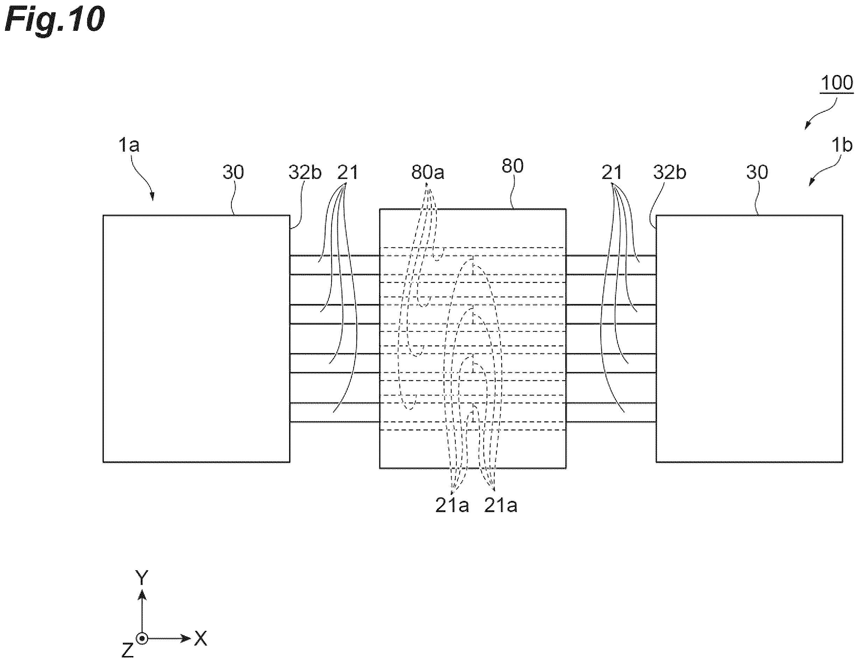

FIG. 10 is a perspective view showing optical coupling structure 100 according to the embodiment. Optical coupling structure 100 includes, for example, an optical connector 1a (one example of "first optical connector"), an optical connector 1b (one example of "second optical connector"), and a sleeve 80. Optical connector 1a and optical connector 1b have the same configuration as optical connector 1 described above. A plurality of ferrule bodies 21 protrude from outer side surface 32b of ferrule accommodating component 30 of optical connector 1a. Similarly, a plurality of ferrule bodies 21 protrude from outer side surface 32b of ferrule accommodating component 30 of optical connector 1b. Optical connector 1a and optical connector 1b are arranged in the X direction so that tip end surfaces 21a and 21a face each other.

Sleeve 80 is disposed between outer side surface 32b of ferrule accommodating component 30 of optical connector 1a and outer side surface 32b of ferrule accommodating component 30 of optical connector 1b. Sleeve 80 includes a plurality of through-holes 80a extending through in the X direction. The plurality of through-holes 80a are arranged so as to correspond to the plurality of ferrules 20 included in each of optical connector 1a and optical connector 1b. The plurality of ferrule bodies 21 protruding from outer side surface 32b of optical connector 1a are inserted into portions on one side of the plurality of respective through-holes 80a. The plurality of ferrule bodies 21 protruding from outer side surface 32b of optical connector 1b are inserted into portions on another side of the plurality of respective through-holes 80a. Thus, the positions of optical connector 1a and optical connector 1b in the Y direction and the Z direction are defined, and optical connector 1a and optical connector 1b are optically coupled.

When optical connector 1 described above is manufactured, first, each ferrule 20 retaining optical fiber 10 that has been subjected to the rotational alignment is accommodated in each accommodating portion 35 of ferrule accommodating component 30. When ferrule 20 is accommodated in accommodating portion 35, as shown in FIG. 8, side surface 23c of flange 23 is brought into contact with bottom surface 31a of accommodating portion 35, thereby determining the rotation angle of ferrule 20 around central axis L with respect to ferrule accommodating component 30. In this state, as shown in FIG. 9, ferrule 20 is abutted against inner side surface 32a of accommodating portion 35 in the X direction. Thus, the position of ferrule 20 in the X direction with respect to ferrule accommodating component 30 is determined. Thereafter, ferrule 20 is removably fixed to accommodating portion 35 by adhering ferrule 20 to accommodating portion 35 using a hot-melt adhesive for example. Thus, optical connector 1 in which each ferrule 20 is fixed to each accommodating portion 35 of ferrule accommodating component 30 is obtained.

Next, a method for replacing optical fiber 10 will be described. When a problem such as disconnection occurs in any of optical fibers 10, that optical fiber 10 needs to be replaced. In this case, ferrule 20 retaining optical fiber 10 in which the problem has occurred is set as a replacement target, and ferrule 20 of the replacement target is removed from ferrule accommodating component 30. In the case where ferrule 20 of the replacement target is fixed to accommodating wall surface 35a with a hot-melt adhesive, ferrule 20 of the replacement target can be removed from ferrule accommodating component 30 by heating and melting the hot-melt adhesive.

Next, ferrule 20 of an alternative one is prepared in place of ferrule 20 of the replacement target. Then, optical fiber 10 of a new one is rotationally aligned with respect to ferrule 20 of an alternative one. At this time, for example, as shown in FIG. 5, the rotation angle of optical fiber 10 around central axis L with respect to ferrule 20 is determined so that virtual straight line VL passing through two cores 11 and central axis L is parallel to reference straight line RL along side surface 23c. In this state, optical fiber 10 is retained in ferrule 20 of the alternative one.

Next, ferrule 20 of the alternative one retaining optical fiber 10 of the new one is accommodated in accommodating portion 35 in which ferrule 20 of the replacement target was accommodated. At this time, as shown in FIG. 8, side surface 23c of flange 23 of ferrule 20 of the alternative one is brought into contact with bottom surface 31a of accommodating portion 35, thereby determining the rotation angle of ferrule 20 of the alternative one around central axis L with respect to ferrule accommodating component 30. In this state, as shown in FIG. 9, ferrule 20 of the alternative one is abutted against inner side surface 32a of accommodating portion 35 in the X direction. This determines the position of ferrule 20 of the alternative one in the X direction with respect to ferrule accommodating component 30.

Ferrule 20 of the alternative one is then removably fixed to accommodating portion 35, for example, by adhering ferrule 20 of the alternative one to accommodating portion 35 using a hot-melt adhesive. Thus, the replacement operation from ferrule 20 of the replacement target to ferrule 20 of the alternative one is completed. When a problem occurs in another optical fiber 10, ferrule 20 retaining the other optical fiber 10 is set as a replacement target, and the above-described replacement operation is performed again. In this manner, in the present embodiment, each optical fiber 10 can be individually replaced.

The effects obtained by ferrule accommodating component 30, ferrule accommodating structure 70, optical coupling structure 100, and a method for replacing optical fiber 10 according to the present embodiment described above will be described.

In the present embodiment, since the plurality of ferrules 20 each retaining a respective one of the plurality of optical fibers 10 are each accommodated in a respective one of the plurality of accommodating portions 35 of ferrule accommodating component 30, each ferrule 20 can be independently fixed to accommodating portion 35. Further, ferrule 20 is removably fixed to accommodating wall surface 35a of accommodating portion 35. Thus, when any one of optical fibers 10 needs to be replaced, one ferrule 20 corresponding to optical fiber 10 can be removed from accommodating wall surface 35a, and ferrule 20 retaining optical fiber 10 of a new one can be fixed to accommodating wall surface 35a. Thus, according to the present embodiment, when optical fiber 10 is required, optical fiber 10 that needs to be replaced can be individually replaced instead of replacing the entire optical connector 1. In this case, the cost required for replacing optical fiber 10 can be reduced as compared with the case where all optical fibers 10 are replaced.

Further, in the present embodiment, accommodating wall surface 35a of accommodating portion 35 and flange 23 of ferrule 20 are provided with angle determination mechanism M for determining a rotation angle of ferrule 20 around central axis L with respect to ferrule accommodating component 30. Thus, when ferrule 20 corresponding to optical fiber 10 that needs to be replaced is removed from accommodating wall surface 35a and ferrule 20 retaining optical fiber 10 of a new one that has been subjected to the rotation alignment is disposed on accommodating wall surface 35a, ferrule 20 can be easily fixed to accommodating wall surface 35a while maintaining the rotation angle of optical fiber 10 that has been subjected to the rotation alignment. Further, when ferrule 20 is disposed on accommodating wall surface 35a, flange 23 of ferrule 20 is abutted against inner side surface 32a in the X direction, whereby the position of ferrule 20 in the X direction with respect to ferrule accommodating component 30 can be easily determined.

In this manner, in the present embodiment, when optical fiber 10 needs to be replaced, optical fiber 10 that needs to be replaced can be replaced individually, and further, ferrule 20 can be easily fixed to accommodating portion 35 when optical fiber 10 is replaced. This makes it possible to reduce the time and effort required for replacing optical fiber 10 and to easily replace optical fiber 10. Further, as in the present embodiment, when ferrule 20 is configured to be positioned with respect to ferrule accommodating component 30 using flange 23, the shape of ferrule body 21 retaining optical fiber 10 can be set to any shape. For example, when ferrule body 21 has a cylindrical shape, there is an advantage that central axis L of optical connector 1a and central axis L of optical connector 1b can be easily aligned with each other by using sleeve 80.

As in the present embodiment, angle determination mechanism M may include bottom surface 31a formed on accommodating wall surface 35a and side surface 23c formed on flange 23 and in contact with bottom surface 31a. In this case, the rotation angle of ferrule 20 around central axis L with respect to ferrule accommodating component 30 can be easily and accurately determined by a simple operation of bringing bottom surface 31a and side surface 23c into contact with each other.

As in the present embodiment, accommodating portion 35 may be a groove formed between side walls 33 and 33 adjacent to each other. Flange 23 may be in contact with bottom surface 31a and lid 40. In this case, ferrule 20 can be easily positioned with respect to ferrule accommodating component 30 by a simple operation of pressing flange 23 against bottom surface 31a by lid 40.

As in the present embodiment, ferrule accommodating component 30 and lid 40 each may be formed of a magnetic material. Lid 40 may be fixed to ferrule accommodating component 30 with a magnetic force generated between lid 40 and ferrule accommodating component 30. In this case, ferrule 20 can be easily fixed to ferrule accommodating component 30 by using the magnetic force between lid 40 and ferrule accommodating component 30. Further, when lid 40 is configured to be fixed to ferrule accommodating component 30 using the magnetic force, lid 40 can be easily removed from ferrule accommodating component 30. This makes it possible to easily perform the operation of removing ferrule 20 from ferrule accommodating component 30 when optical fiber 10 is replaced.

As in the present embodiment, optical connector 1 may include holding member 50 facing inner side surface 32a with flange 23 interposed therebetween, and elastic member 60 urging flange 23 in the X direction with respect to inner side surface 32a. In this case, flange 23 can be more reliably abutted against inner side surface 32a by the urging force of elastic member 60. This makes it possible to more reliably position ferrule 20 in the X direction with respect to ferrule accommodating component 30.

As in the present embodiment, optical fiber 10 may be a multi-core fiber, a polarization maintaining fiber, or a bundle fiber. When such optical fibers 10 are used, rotational alignment is required, and the rotational alignment operation increases by the number of optical fibers 10 to be replaced. In contrast, according to optical connector 1 in which optical fibers 10 can be individually replaced, the rotational alignment operation does not have to be performed on optical fiber 10 that does not need to be replaced, and thus, the time and effort required for replacement can be effectively reduced.

As in the present embodiment, optical coupling structure 100 may include sleeve 80 including a plurality of through-holes 80a configured to allow the plurality of ferrules 20 to be inserted through the plurality of through-holes. The plurality of ferrules 20 of optical connector 1a may be inserted into portions on one side of the plurality of respective through-holes 80a, and the plurality of ferrules 20 of optical connector 1b may be inserted into portions on another side of the plurality of respective through-holes 80a. In this case, sleeve 80 can regulate the positions of optical connector 1a and optical connector 1b. Furthermore, the insertion of the plurality of ferrule bodies 21 into sleeve 80 can reduce the rotation of optical connector 1a itself and the rotation of optical connector 1b itself. Thus, optical connector 1a and optical connector 1b can be optically coupled with high accuracy, and the connection loss between optical connector 1a and optical connector 1b can be reduced.

### <Modification 1>

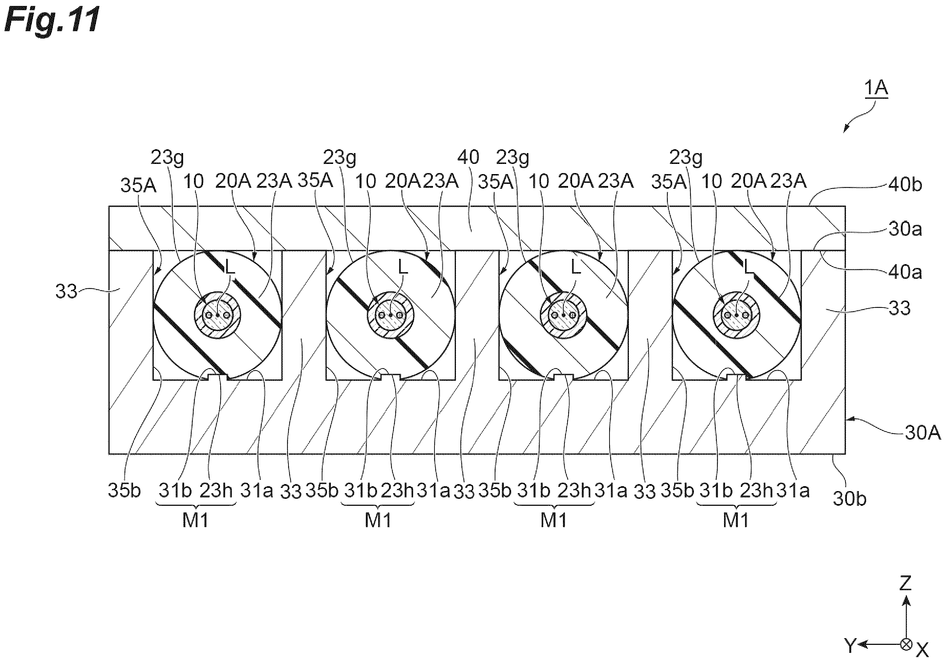

FIG. 11 is a cross-sectional view showing an optical connector 1A according to a modification 1. In optical connector 1A according to the modification 1, an angle determination mechanism M1 that determines a rotation angle of a ferrule 20A with respect to a ferrule accommodating component 30A is different from that of optical connector 1 according to the above-described embodiment. In each accommodating portion 35A of ferrule accommodating component 30A included in optical connector 1A, a protrusion 31b is provided on bottom surface 31a. Bottom surface 31a, inner side surface 32a (see FIG. 6), and two side surfaces 33a and 33a (see FIG. 6) adjacent to each other constitute accommodating wall surface 35b of an accommodating portion 35A. Protrusion 31b protrudes upward from bottom surface 31a in the central portion of accommodating portion 35A in the Y direction, and extends linearly in the X direction, for example. When viewed from the X direction, protrusion 31b has, for example, a rectangular shape. However, protrusion 31b may have a semicircular shape or another shape.

A flange 23A of ferrule 20A has, for example, a circular shape when viewed from the X direction. An outer peripheral surface 23g of flange 23A is a cylindrical surface centered on central axis L and constitutes the outer surface of flange 23A. Outer peripheral surface 23g has a recess 23h formed at a position corresponding to protrusion 31b. Recess 23h is recessed from outer peripheral surface 23g toward central axis L and extends linearly in the X direction. Recess 23h has, for example, a rectangular shape when viewed from the X direction. However, the shape of recess 23h can be changed as appropriate in accordance with the shape of protrusion 31b. In a state where ferrule 20A is accommodated in accommodating portion 35A, protrusion 31b of flange 23A is fitted to recess 23h of accommodating portion 35A. When ferrule 20A is accommodated in accommodating portion 35A, ferrule 20A is disposed such that protrusion 31b is fitted to recess 23h, whereby the rotation angle of ferrule 20A around central axis L with respect to ferrule accommodating component 30A is defined. Thus, protrusion 31b and recess 23h constitute angle determination mechanism M1 for determining the rotation angle of ferrule 20A around central axis L with respect to ferrule accommodating component 30A.

Even in the form of optical connector 1A, optical fiber 10 can be easily replaced as in the above-described embodiment. Further, in optical connector 1A, the rotation angle of ferrule 20A around central axis L with respect to ferrule accommodating component 30A is defined by the fitting of protrusion 31b and recess 23h. In this case, the rotation angle of ferrule 20A around central axis L with respect to ferrule accommodating component 30A can be easily and accurately determined by a simple operation of fitting protrusion 31b and recess 23h to each other.

### <Modification 2>

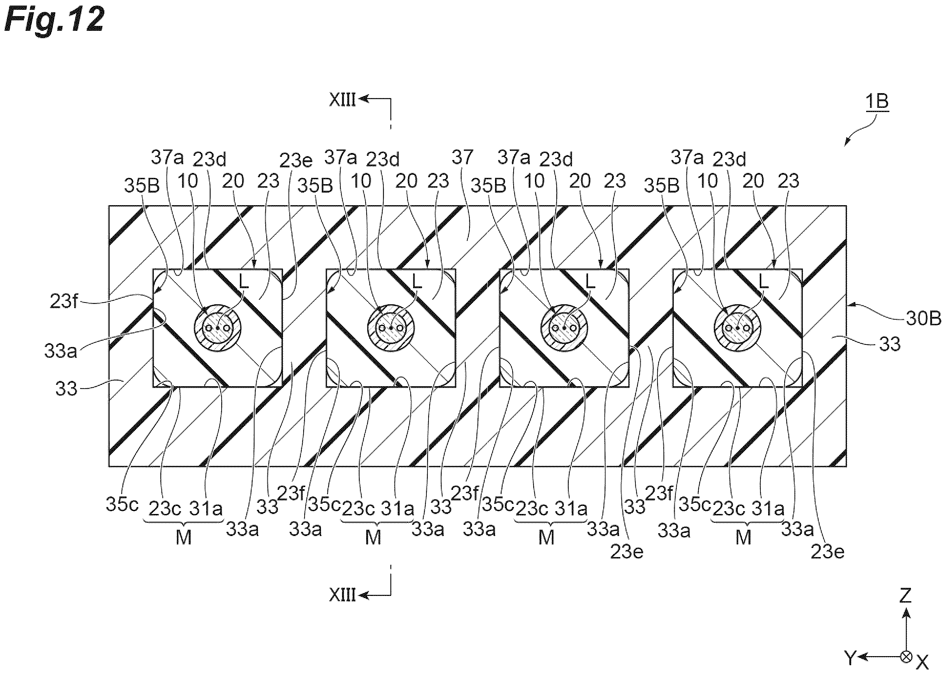

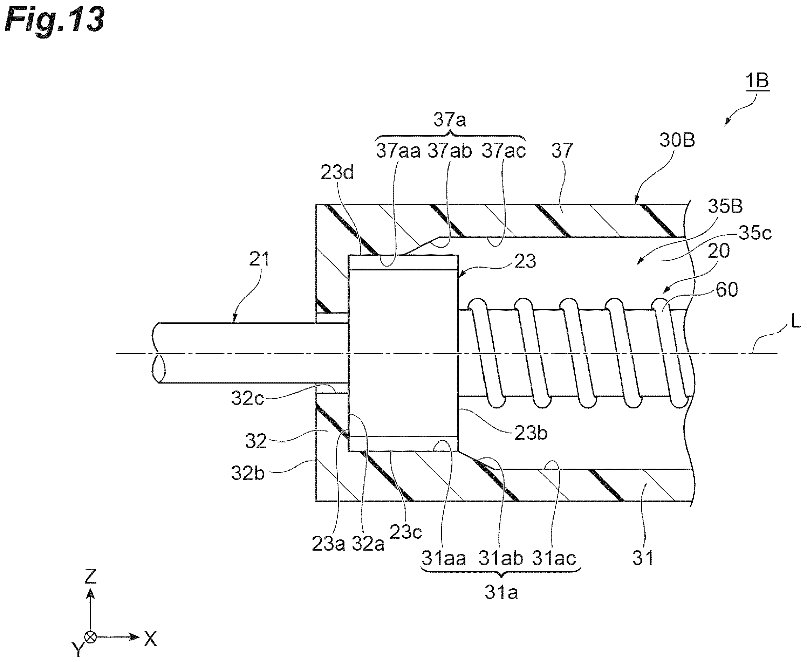

FIG. 12 is a cross-sectional view showing an optical connector 1B according to a modification 2. FIG. 13 is a cross-sectional view of optical connector 1B taken along line XIII-XIII of FIG. 12. Optical connector 1B according to the modification 2 is different from optical connector 1 according to the above-described embodiment in that an accommodating portion 35B of a ferrule accommodating component 30B is configured as a through-hole instead of a groove. In this case, accommodating portion 35B extends through ferrule accommodating component 30B in the X direction, and has a size capable of accommodating ferrule 20. The shape of accommodating portion 35B as viewed from the X direction is a rectangular shape corresponding to the shape of flange 23 of ferrule 20.

Ferrule accommodating component 30B includes a top wall 37 in addition to bottom wall 31 and the plurality of side walls 33. Top wall 37 is provided on the opposite to bottom wall 31 with the plurality of side walls 33 interposed therebetween in the Z direction, and is formed integrally with the plurality of side walls 33 and bottom wall 31. Top wall 37 has a top surface 37a facing bottom surface 31a in the Z direction. Top surface 37a is, for example, a flat surface along the X direction and the Y direction. In the case where top surface 37 is provided as described above, lid 40 is not provided unlike the above-described embodiment, and thus a structure for fixing lid 40 to ferrule accommodating component 30B is not required. Thus, as the material of ferrule accommodating component 30B, it is not necessary to select a magnetic material for fixing lid 40 with a magnetic force, and other materials such as a resin material or a metal material may be selected. Bottom surface 31a, inner side surface 32a, top surface 37a, and two side surfaces 33a and 33a adjacent to each other constitute an accommodating wall surface 35c of accommodating portion 35B.

As shown in FIG. 12, in a state where ferrule 20 is inserted (accommodated) in accommodating portion 35B, side surface 23c, side surface 23d, side surface 23e, and side surface 23f of flange 23 are in contact with bottom surface 31a, top surface 37a, and two side surfaces 33a and 33a of accommodating wall surface 35c, respectively. When ferrule 20 is inserted into accommodating portion 35B, the rotation angle of ferrule 20 around central axis L with respect to ferrule accommodating component 30B is defined by disposing ferrule 20 so that side surface 23c and bottom surface 31a are brought into contact with each other. Thus, side surface 23c and bottom surface 31a constitute angle determination mechanism M for determining the rotation angle of ferrule 20 around central axis L with respect to ferrule accommodating component 30B.

As shown in FIG. 13, top surface 37a includes a flat surface 37aa, an inclined surface 37ab, and a flat surface 37ac. Flat surface 37aa and flat surface 37ac are flat surfaces along the X direction and the Y direction. Flat surface 37aa extends rearward from inner side surface 32a of end wall 32 and is in contact with side surface 23c of flange 23. Flat surface 37ac is disposed at a position rearward of flat surface 37aa and upward of flat surface 37aa. Inclined surface 37ab is disposed between flat surface 37aa and flat surface 37ac and connects flat surface 37aa and flat surface 37ac. Inclined surface 37ab is inclined so as to be gradually positioned upward as it approaches flat surface 37ac from flat surface 37aa. In other words, inclined surface 37ab is inclined such that the distance between central axis L and inclined surface 37ab in the Z direction gradually increases as the distance from inner side surface 32a in the X direction increases.

Bottom surface 31a includes a flat surface 31aa, an inclined surface 31ab, and a flat surface 31ac. Flat surface 31aa and flat surface 37ac are flat surfaces along the X direction and the Y direction. Flat surface 31aa extends rearward from inner side surface 32a of end wall 32 and is in contact with side surface 23d of flange 23. Flat surface 37ac is disposed at a position rearward of flat surface 31aa and downward of flat surface 31aa. Inclined surface 31ab is disposed between flat surface 31aa and flat surface 31ac, and connects flat surface 31aa and flat surface 31ac. Inclined surface 31ab is inclined so as to be gradually positioned downward as it approaches flat surface 31ac from flat surface 31aa. In other words, inclined surface 31ab is inclined such that the distance between central axis L and inclined surface 31ab in the Z direction gradually increases as the distance from inner side surface 32a in the X direction increases. Inclined surface 31ab is formed at a position deviated rearward from a position facing inclined surface 37ab in the Z direction.

When ferrule 20 is inserted into accommodating portion 35B in the X direction, side surface 23c of flange 23 is guided to front flat surface 31aa by inclined surface 31ab, and side surface 23d of flange 23 is guided to front flat surface 37aa by inclined surface 37ab. As described above, inclined surface 37ab and inclined surface 31ab have functions of guiding the insertion of ferrule 20 into accommodating portion 35B. Side surface 23c and side surface 23d of flange 23 are in contact with flat surface 37aa and flat surface 31aa, respectively. As a result, side surface 23c and flat surface 31aa are brought into with each other, and the rotation angle of ferrule 20 with respect to ferrule accommodating component 30B is defined.

Even in the form of optical connector 1B, optical fiber 10 can be easily replaced as in the above-described embodiment. Further, when accommodating portion 35B is a through-hole extending through ferrule accommodating component 30B, ferrule 20 can be easily positioned with respect to ferrule accommodating component 30B by a simple operation of inserting ferrule 20 into accommodating portion 35B. Further, when inclined surface 37ab and inclined surface 31ab are configured to guide the insertion of ferrule 20 into accommodating portion 35B, high processing accuracy of accommodating portion 35B and ferrule 20 is not required, and thus the manufacturing of accommodating portion 35B and ferrule 20 is facilitated. It is not necessary to form inclined surface 37ab and inclined surface 31ab. For example, top surface 37a may include only flat surface 37aa, and bottom surface 31a may include only flat surface 31aa. Only one of inclined surface 37ab and inclined surface 31ab may be formed, and the other of inclined surface 37ab and inclined surface 31ab does not have to be formed.

### <Modification 3>

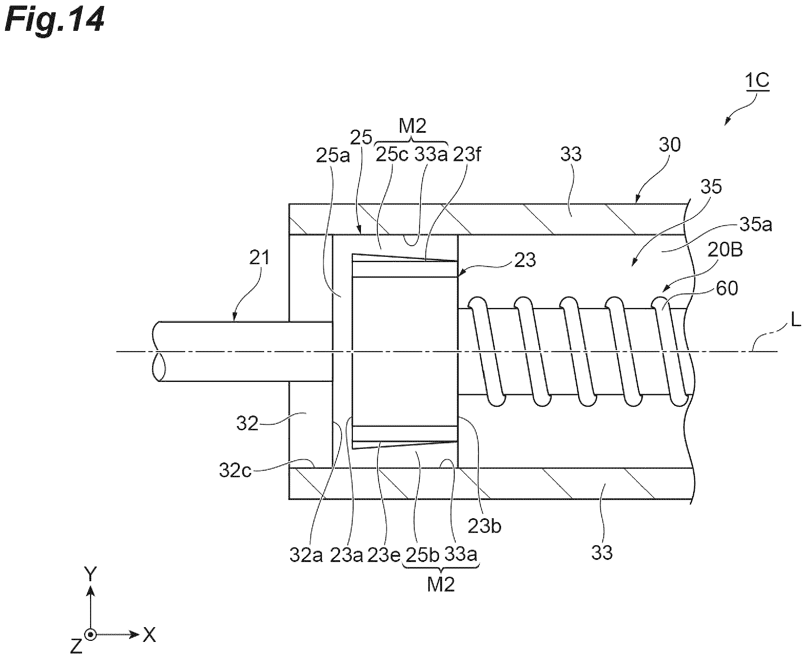

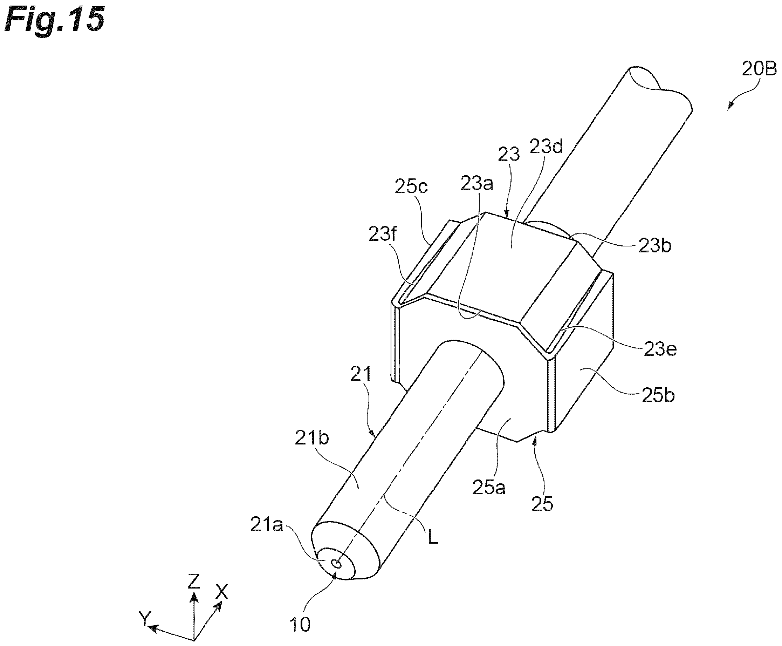

FIG. 14 is a cross-sectional view showing an optical connector 1C according to a modification 3. FIG. 15 is a perspective view showing a ferrule 20B included in optical connector 1C. Optical connector 1C according to the modification 3 is different from optical connector 1 according to the above-described embodiment in that ferrule 20B has an urging member 25. As shown in FIGs. 14 and 15, urging member 25 is attached to flange 23. Urging member 25 includes, for example, a mounting portion 25a, a plate spring 25b, and a plate spring 25c. Mounting portion 25a is mounted on front end surface 23a of flange 23. Plate spring 25b extends rearward from one end of mounting portion 25a in the Y direction and is disposed on side surface 23e of flange 23. One end of plate spring 25b is a fixed end attached to mounting portion 25a. The other end of plate spring 25b is a free end disposed on side surface 23e. Plate spring 25c extends rearward from the other end of mounting portion 25a in the Y direction and is disposed on side surface 23f of flange 23. One end of plate spring 25c is a fixed end attached to mounting portion 25a. The other end of plate spring 25c is a free end disposed on side surface 23e.

When an external force is applied to each of the free ends of plate spring 25b and plate spring 25c, a restoring force for returning the free end to its original position is generated in each of plate spring 25b and plate spring 25c. Thus, when plate spring 25b and plate spring 25c are pressed toward central axis L in the Y direction (i.e., in a direction toward central axis L in the Y direction), plate spring 25b and plate spring 25c urges outward in the Y direction (i.e., in a direction away from central axis L in the Y direction). As shown in FIG. 14, in a state where ferrule 20B is accommodated in accommodating portion 35, plate spring 25b and plate spring 25c are in contact with two side surfaces 33a and 33a adjacent to each other, respectively, and are pressed toward central axis L in the Y direction from two side surfaces 33a and 33a. As a result, plate spring 25b and plate spring 25c urge two side surfaces 33a and 33a.

As described above, plate spring 25b and plate spring 25c urge two side surfaces 33a and 33a, and thus the position of ferrule 20B in the Y direction with respect to ferrule accommodating component 30 is defined. Further, plate spring 25b and plate spring 25c are aligned with two side surfaces 33a and 33a, so that the rotation angle of ferrule 20B around central axis L with respect to ferrule accommodating component 30 is defined. Thus, plate spring 25b, plate spring 25c, and two side surfaces 33a and 33a constitute an angle determination mechanism M2 for determining the rotation angle of ferrule 20B around central axis L with respect to ferrule accommodating component 30.

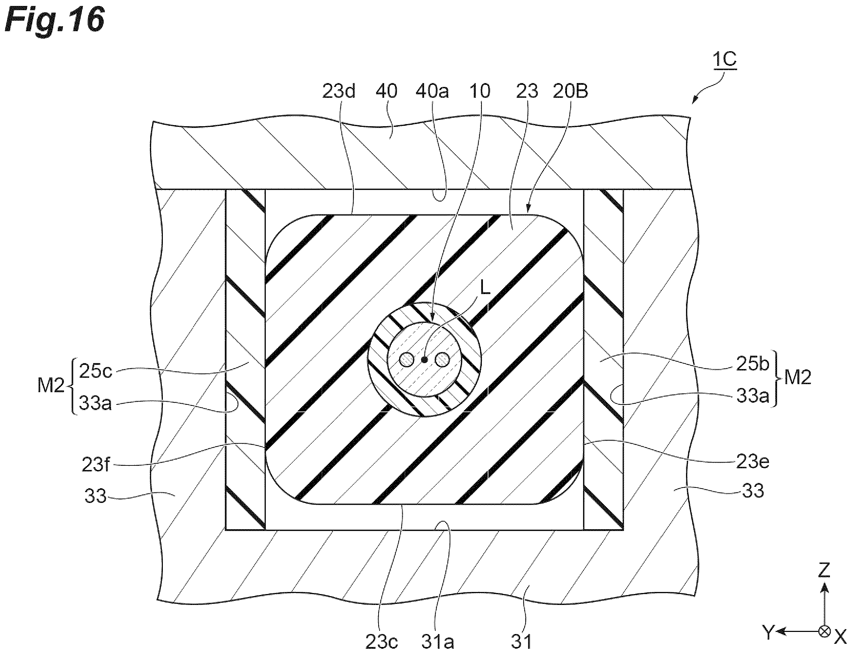

FIG. 16 is a cross-sectional view showing another example of a cross section of optical connector 1C. As shown in FIG. 16, side surface 23d of flange 23 may be spaced apart from rear surface 40a of lid 40 in the Z direction. That is, side surface 23d of flange 23 may face rear surface 40a of lid 40 with a gap therebetween. Similarly, side surface 23c of flange 23 may be spaced apart from bottom surface 31a of accommodating portion 35 in the Z direction. That is, side surface 23c of flange 23 may face bottom surface 31a of accommodating portion 35 with a gap therebetween. Side surface 23d and side surface 23c may be in contact with rear surface 40a and bottom surface 31a, respectively, without being limited to the example shown in FIG. 16.

Even in the form of optical connector 1C, optical fiber 10 can be easily replaced as in the above-described embodiment. Further, when the position of ferrule 20B in the Y direction with respect to ferrule accommodating component 30 is configured to be defined by plate spring 25b and plate spring 25c, high machining accuracy of accommodating portion 35 and ferrule 20B is not required, and thus the manufacturing of accommodating portion 35 and ferrule 20B is facilitated. Plate spring 25b and plate spring 25c may be provided in accommodating portion 35 instead of being provided in ferrule 20B.

### <Modification 4>

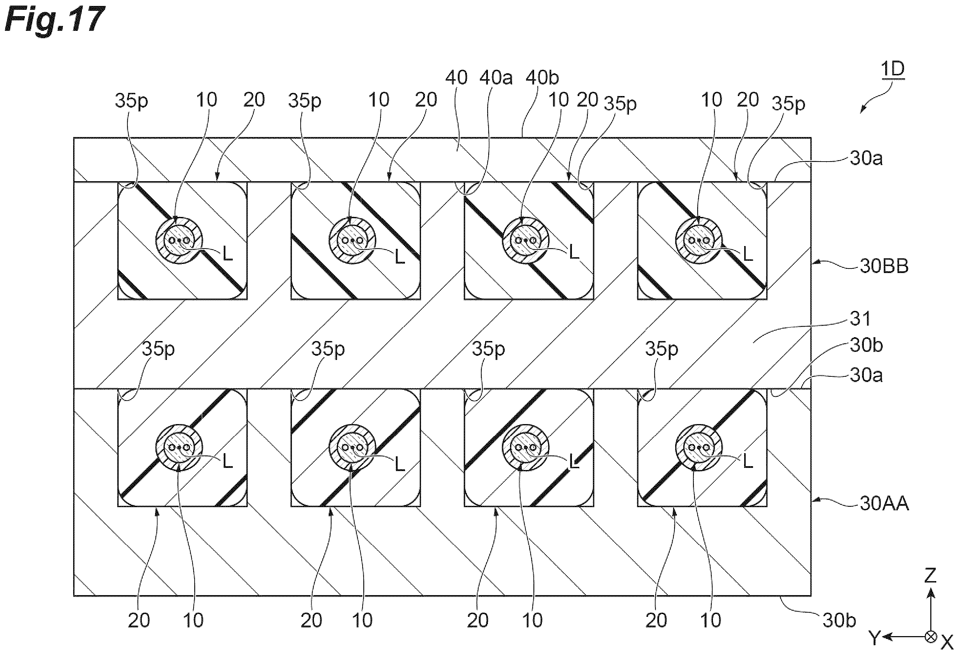

FIG. 17 is a perspective view showing an optical connector 1D according to a modification 4. Optical connector 1D according to the modification 4 is different from optical connector 1 according to the above-described embodiment in that the plurality of optical fibers 10 are arranged in two rows. Optical connector 1D includes a ferrule accommodating component 30AA and a ferrule accommodating component 30BB having the same configuration as ferrule accommodating component 30. Ferrule accommodating component 30AA accommodates a plurality of ferrules 20 each retain a respective one of the plurality of optical fibers 10 arranged in a line. Ferrule accommodating component 30BB also accommodates a plurality of ferrules 20 each retain a respective one of the plurality of optical fibers 10 arranged in a line, similarly to ferrule accommodating component 30AA. In optical connector 1D, ferrule accommodating component 30AA and ferrule accommodating component 30BB are stacked in two stages in the Z direction.

For example, ferrule accommodating component 30BB is stacked on ferrule accommodating component 30AA such that lower end surface 30b of ferrule accommodating component 30BB is in contact with upper end surface 30a of ferrule accommodating component 30AA. As a result, opening 35p of each accommodating portion 35 of ferrule accommodating component 30AA is closed by lower end surface 30b of ferrule accommodating component 30BB. Thus, bottom wall 31 of ferrule accommodating component 30BB functions as a lid that closes opening 35p of each accommodating portion 35 of ferrule accommodating component 30AA. Lid 40 according to the above-described embodiment is provided at opening 35p of each accommodating portion 35 of ferrule accommodating component 30AA. Lid 40 is disposed on ferrule accommodating component 30AA such that rear surface 40a is in contact with upper end surface 30a of ferrule accommodating component 30AA.

Even in the form of optical connector 1D, optical fiber 10 can be easily replaced as in the above-described embodiment. Further, according to optical connector 1D, a plurality of optical fibers 10 can be arranged in a plurality of rows, and a larger number of optical fibers 10 can be mounted. Further, bottom wall 31 of ferrule accommodating component 30BB is used as a lid for closing the openings of each accommodating portion 35 of ferrule accommodating component 30AA, so that lid 40 for closing openings 32c of each accommodating portion 35 of ferrule accommodating component 30AA can be omitted. This eliminates the need to provide lid 40 between ferrule accommodating component 30AA and ferrule accommodating component 30BB, and thus the number of components can be reduced.

The present disclosure is not limited to the above-described embodiments and modifications, and various other modifications can be made. For example, the embodiments and modifications described above may be combined with each other within a consistent range according to the required purpose and effect. In the above-described embodiments and modifications, the case where the ferrule body has a cylindrical shape has been described. However, the shape of the ferrule body may be another shape such as a rectangular shape. The shape of the accommodating portion as viewed in the X direction does not need to be rectangular, and may be other shapes such as a circular shape.

### Reference Signs List

1, 1A, 1B, 1C, 1D optical connector
1a optical connector (one example of "first optical connector")
1b optical connector (one example of "second optical connector")
10 optical fiber
11 core
12 cladding
20, 20A, 20B ferrule
21a tip end surface
21b outer surface
23, 23A flange
23a front end surface
23b rear end surface
23c side surface (one example of "second flat surface")
23d, 23e, 23f side surface
23g outer peripheral surface
23h recess
25 urging member
25a mounting portion
25b, 25c plate spring
30, 30A, 30AA, 30B, 30BB ferrule accommodating component
30a upper end surface
30b lower end surface
31 bottom wall
31a bottom surface (one example of "first flat surface")
31b protrusion
31aa, 31ac, 37aa, 37ac flat surface
31ab, 37ab inclined surface
32 end wall
32A abutting portion
32a inner side surface
32b outer side surface
32c, 35p opening
33 side wall
33a side surface (one example of "inner wall surface")
35, 35A, 35B accommodating portion
35a, 35b, 35c accommodating wall surface
37 top wall
37a top surface
40 lid
40a rear surface
40b upper surface
50 holding member
50a insertion hole
60 elastic member
70 ferrule accommodating structure
80 sleeve
80a through-hole
100 optical coupling structure
L central axis
M, M1, M2 angle determination mechanism
R accommodation space
RL reference straight line
VL virtual straight line

## Claims

1. An optical connector comprising:
A plurality of optical fibers including a plurality of central axes extending in a first direction one by one, and arranged in a second direction intersecting the first direction;
a plurality of ferrules retaining the plurality of optical fibers one by one; and
a ferrule accommodating component including a plurality of accommodating portions arranged in the second direction, the plurality of accommodating portions each being separated by a plurality of side walls arranged in the second direction, the plurality of accommodating portions accommodating the plurality of ferrules one by one,
wherein each of the plurality of optical fibers includes at least one of a core or a stress applying portion at a position deviated from the central axis,
wherein each of the plurality of ferrules includes
a ferrule body retaining the optical fiber, and
a flange protruding outside from an outer surface of the ferrule body,
wherein each of the plurality of accommodating portions includes an accommodating wall surface forming an accommodation space accommodating the ferrule, the ferrule being removably fixed to the accommodating wall surface,
wherein the accommodating wall surface includes an abutting portion, the flange abutting against the abutting portion in the first direction, and
wherein the accommodating wall surface and the flange are provided with an angle determination mechanism configured to determine a rotation angle of the ferrule around the central axis with respect to the ferrule accommodating component.

2. The optical connector according to claim 1,
wherein the angle determination mechanism includes
a first flat surface formed on the accommodating wall surface, and
a second flat surface formed on the flange and being in contact with the first flat surface.

3. The optical connector according to claim 1,
wherein the angle determination mechanism includes
a protrusion formed on one of the accommodating wall surface and the flange, and
a recess formed in another one of the accommodating wall surface and the flange and fitted to the protrusion.

4. The optical connector according to any one of claims 1 to 3,
wherein each of the plurality of accommodating portions is a groove formed between a pair of side walls adjacent to each other with the ferrule interposed therebetween among the plurality of side walls,
wherein a bottom surface of the groove constitutes the accommodating wall surface together with respective inner wall surfaces of the pair of side walls,
wherein a lid is provided at an opening of the groove facing the bottom surface, the lid covering the opening, and
wherein the flange is in contact with the bottom surface and the lid.

5. The optical connector according to claim 4,
wherein the ferrule accommodating componentand the lid each are formed of a magnetic material, and
wherein the lid is fixed to the ferrule accommodating component with a magnetic force generated between the lid and the ferrule accommodating component.

6. The optical connector according to any one of claims 1 to 3,
wherein each of the plurality of accommodating portions is a through-hole extending through the ferrule accommodating component in the first direction,
wherein an inner surface of the through-hole constitutes the accommodating wall surface, and
wherein the flange is in contact with the inner surface.

7. The optical connector according to any one of claims 1 to 6, further comprising:
a holding member facing the abutting portion with the flange interposed therebetween in the first direction; and
an elastic member provided between the flange and the holding member, held by the holding member in the first direction, and urging the flange toward the abutting portion.

8. The optical connector according to any one of claims 1 to 7,
wherein the optical fiber is a multi-core fiber, a polarization maintaining fiber, or a bundle fiber.

9. A ferrule accommodating component configured to accommodate a plurality of ferrules each retaining an optical fiber including at least one of a core or a stress applying portion at a position deviated from a central axis, the ferrule accommodating component comprising:
a plurality of accommodating portions separated by a plurality of side walls arranged in a second direction intersecting a first direction in which the central axis extends, the plurality of accommodating portions being configured to accommodate the plurality of ferrules one by one,
wherein each of the plurality of accommodating portions includes an accommodating wall surface forming an accommodation space configured to accommodate the ferrule, the ferrule being removably fixed to the accommodating wall surface,
wherein the accommodating wall surface includes an abutting portion configured to allow a flange provided on the ferrule to abut against the abutting portion in the first direction, and
wherein the accommodating wall surface is provided with an angle determination mechanism configured to determine a rotation angle of the ferrule around the central axis with respect to the ferrule accommodating component.

10. A ferrule accommodating structure comprising:
the ferrule accommodating component according to claim 9; and
the plurality of ferrules accommodated in the plurality of respective accommodating portions and removably fixed to the plurality of respective accommodating portions.

11. An optical coupling structure comprising:
a first optical connector and a second optical connector each being the optical connector according to any one of claims 1 to 8,
wherein the plurality of optical fibers of the first optical connector are disposed to face the plurality of optical fibers of the second optical connector in the first direction and are optically coupled to the plurality of respective optical fibers of the second optical connector.

12. The optical coupling structure according to claim 11, further comprising:
a sleeve including a plurality of through-holes configured to allow the plurality of ferrules to be inserted through the plurality of through-holes,
wherein the plurality of ferrules of the first optical connector are inserted into portions on one side of the plurality of respective through-holes, and
wherein the plurality of ferrules of the second optical connector are inserted into portions on another side of the plurality of respective through-holes.

13. A method for replacing the optical fiber using the optical connector according to any one of claims 1 to 8, the method comprising:
removing the ferrule retaining the optical fiber of a replacement target among the plurality of optical fibers from the accommodating portion; and
accommodating the ferrule of an alternative one retaining the optical fiber of a new one in the accommodating portion from which the ferrule of the replacement target has been removed,
wherein the accommodating the ferrule of the alternative one in the accommodating portion includes
rotationally aligning the optical fiber of the new one with respect to the ferrule of the alternative one around the central axis,
determining a rotation angle of the ferrule of the alternative one around the central axis with respect to the ferrule accommodating component with reference to the angle determination mechanism provided on the flange and the accommodating wall surface, and
determining a position of the ferrule of the alternative one in the first direction with respect to the ferrule accommodating component by the flange abutting against the abutting portion of the accommodating wall surface in the first direction.
